# EUROPEAN PATENT APPLICATION

(11) **EP 4 685 775 A1**
(43) Date of publication of application: **28.01.2026**
(21) Application number: 24774138.2
(22) Date of filing: 20.03.2024
(51) Int. Cl.: G09F 9/30, F16C 11/10

(54) **DISPLAY SCREEN AND CURVATURE ADJUSTING MECHANISM**

(30) Priority: 22.03.2023 CN 202310323226
(71) Applicant: Roe Visual Co., Ltd., Shenzhen, Guangdong 518000 (CN)
(72) Inventor: ZHANG, Chao, Shenzhen, Guangdong 518000 (CN); TAO, Yuhang, Shenzhen, Guangdong 518000 (CN); XIAO, Peng, Shenzhen, Guangdong 518000 (CN); QIU, Guanhua, Shenzhen, Guangdong 518000 (CN); MENG, Linke, Shenzhen, Guangdong 518000 (CN)
(74) Representative: Renaudo, Adrien Hanouar
(86) International application number: PCT/CN2024/082643
(87) International publication number: WO 2024/193573

(57) **Abstract**

Provided are a display screen and a curvature adjustment mechanism. The display screen includes a curvature adjustment mechanism, the curvature adjustment mechanism includes a first unit (1), a first slider (3), a second slider (4) and a second unit (2), the first slider (3) and the second slider (4) are fixedly connected to the first unit (1); the second unit (2) is provided with a first arcuate groove (6) and a second arcuate groove (7), centers of the first arcuate groove (6) and the second arcuate groove (7) do not overlap; the first slider (3) is able to slide in the first arcuate groove (6), and the second slider (4) is able to slide in the second arcuate groove (7). The sliding of the first unit (6) and the second unit (7) is limited by using double arcuate grooves having different circle centers, such that the problem that a display screen is not in an ideal curvature when the curvature of the display screen is adjusted by using a single arcuate groove can be solved.

## Description

### CROSS-REFERENCE TO RELATED APPLICATIONS

The present disclosure makes reference to Chinese Patent Application No. 202310323226.4, entitled "Display Screen and Curvature Adjustment Mechanism", filed on March 22, 2023, which is incorporated herein by reference in its entirety.

### FIELD

The present disclosure relates to the technical field of display screen, and in particular, to a display screen and a curvature adjustment mechanism.

### BACKGROUND

Today's arc-shaped screens generally adjust the curvature of the curved screen through a curvature adjustment mechanism behind the screen. For example, a patent, with application number 202022600971.3, and titled in an arc-shaped splicing mechanism and an arc-shaped display screen, changes the curvature of the display screen by relative sliding of the first splicing body and the second splicing body. For another example, a patent, with application number CN201810955925.X, and titled in a curved surface adjustment apparatus and a LED display screen, changes the curvature of the display screen by relative sliding of the shell and the middle plate. The inventors found that although the designs of the above two patents can adjust the curvature of the display screen, the curvature of the display screen after adjustment is not a perfect arc. There will be bends in some places of the display screen, and the LED lamp beads at the bends will be damaged.

### SUMMARY

The problem to be solved by the present disclosure is: when adjusting a curvature of a display screen, how to make the curvature of the display screen closer to an ideal curvature.

The technical solutions adopted in the present disclosure are as follows:
a display screen, including a curvature adjustment mechanism, where the curvature adjustment mechanism includes:
   a first unit, a first slider and a second slider, where the first slider and the second slider are fixedly connected to the first unit;
   a second unit, provided with a first arcuate groove and a second arcuate groove, where centers of the first arcuate groove and the second arcuate groove do not overlap; the first slider is able to slide in the first arcuate groove, and the second slider is able to slide in the second arcuate groove.

Additionally, a first point and a second point are taken on the second unit, and where, when a curvature of the display screen is O degrees, the first point is at a position A, and the second point is at a position E;
when the curvature of the display screen is X degrees, the first point is at a position B, and the second point is at a position F; and
when the curvature of the display screen is -X degrees, the first point is at a position C and the second point is at a position G; where,
an arc line L formed by connecting the position A, the position B and the position C is on the same circle as the first arcuate groove; and
an arc line M formed by connecting the position E, the position F and the position G is on the same circle as the second arcuate groove.

Additionally, the display screen further includes a third slider, the third slider is fixedly connected to the first unit;
the second unit is provided with a third arcuate groove, and the third slider is able to slide in the third arcuate groove; centers of the first arcuate groove, the second arcuate groove and the third arcuate groove do not overlap.

Additionally, a third point is taken on the second unit, and where,
when a curvature of the display screen is O degrees, the third point is at a position H; when the curvature of the display screen is X degrees, the third point is at a position I; and
when the curvature of the display screen is -X degrees, the third point is at a position J; where,
an arc line N formed by connecting the position H, the position I, and the position J is on the same circle as the third arcuate groove.

Additionally, the first unit includes a first part and a second part, the first part and the second part are arranged opposite to each other; the first part and the second part are both fixedly provided with the first slider and the second slider;
the second unit includes a third part and a fourth part, and the third part and the fourth part are both provided with the first arcuate groove and the second arcuate groove; where,
the first part is slidably connected to the third part; the second part is slidably connected to the fourth part.

Additionally, the curvature adjustment mechanism further includes:
a spline assembly including a first spline fixed to the first part;
a gear assembly including a first gear meshing with the first spline; and a driving rod, fixedly connected to the first gear; where,
the driving rod is rotatably connected to the third part and the fourth part.

Additionally, the curvature adjustment mechanism further includes a connecting rod, one end of the connecting rod is connected to the third part, and the other end of the connecting rod is connected to the fourth part; the driving rod is sleeved on the connecting rod, and the first gear is arranged between the driving rod and the connecting rod.

Additionally, the first gear is able to rotate relative to the connecting rod;
or, the first gear is fixedly connected to the connecting rod; and the connecting rod is rotatably connected to the third part and the fourth part.

Additionally, the spline assembly further includes a second spline fixed to the second part;
the gear assembly further includes a second gear meshing with the second spline; the first gear and the second gear are fixedly connected to two ends of the driving rod respectively.

A curvature adjustment mechanism, includes:
a first unit, a first slider and a second slider, where the first slider and the second slider are fixedly connected to the first unit;
the second unit is provided with a first arcuate groove and a second arcuate groove, where centers of the first arcuate groove and the second arcuate groove do not overlap; the first slider is able to slide in the first arcuate groove, and the second slider is able to slide in the second arcuate groove.

In summary, the beneficial effects of the present disclosure are:
Using double arcuate grooves with different centers to limit the sliding of the first unit and the second unit can solve the problem that when the curvature of the display screen is adjusted with a single arcuate groove, the display screen is not in an ideal curvature.

### BRIEF DESCRIPTION OF THE DRAWINGS

The accompanying drawings described herein are used to provide a further understanding of the present disclosure, and constitute a part of the present disclosure. Exemplary embodiments of the present disclosure and the description thereof are used to explain the present disclosure, but do not constitute improper limitations to the present disclosure. In the drawings:

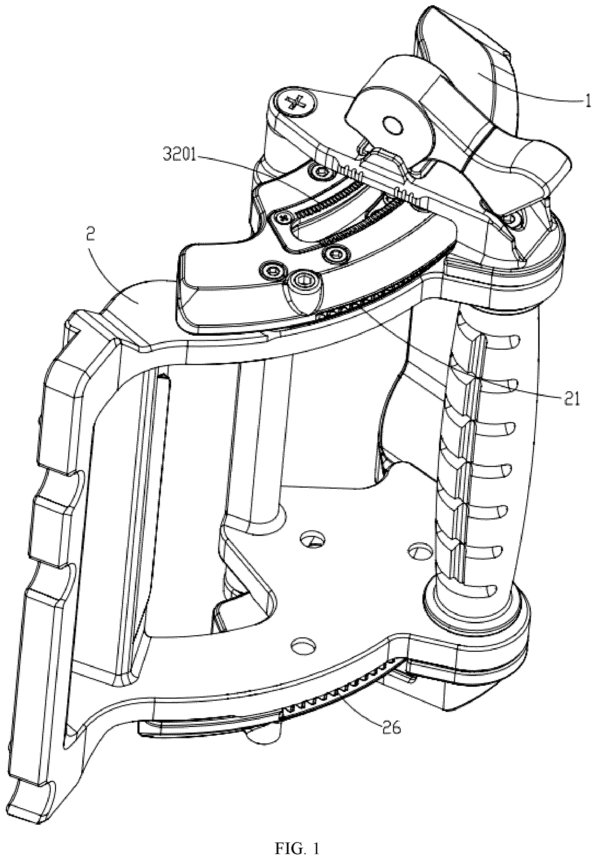

FIG. 1 is a schematic structural diagram of a curvature adjustment mechanism;
FIG. 2 is a cross-sectional view of a curvature adjustment mechanism;
FIG. 3 is an exploded view of a curvature adjustment mechanism;
FIG. 4 is a schematic structural diagram of a second unit; and
FIG. 5 is a simulation diagram of a curvature adjustment of a display screen.

### DETAILED DESCRIPTION OF EXAMPLE EMBODIMENTS

In order to make the above-mentioned objects, features and advantages of the present disclosure more obvious and easier to understand, the specific embodiments of the present disclosure are described in detail below with reference to the accompanying drawings. In the following description, numerous specific details are set forth to provide a thorough understanding of the present disclosure. However, the present disclosure can be implemented in many other ways than those described herein, and those skilled in the art can make similar improvements without violating the connotation of the present disclosure. Therefore, the present disclosure is not limited to the specific implementation disclosed below.

It should be noted that when an element is referred to as being "fixed to" another element, it may be directly on the other element or there may be an element located in between. When an element is referred to as being "connected to" another element, it can be directly connected to the other element or intervening elements may be present.

Unless otherwise defined, all technical and scientific terms used herein have the same meaning as commonly understood by one of ordinary skill in the art to which this invention belongs. The terms used in the description of the present disclosure are only for the purpose of describing specific embodiments and are not intended to limit the present disclosure. As used herein, the term "and/or" includes any and all combinations of one or more of the associated listed items.

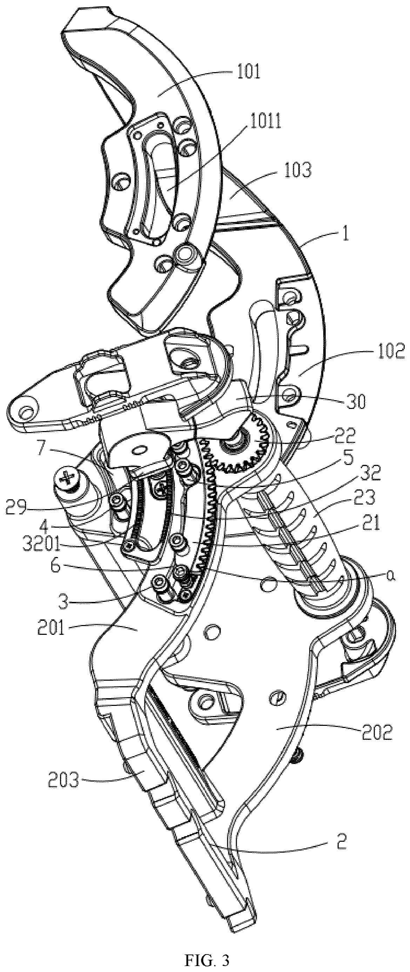

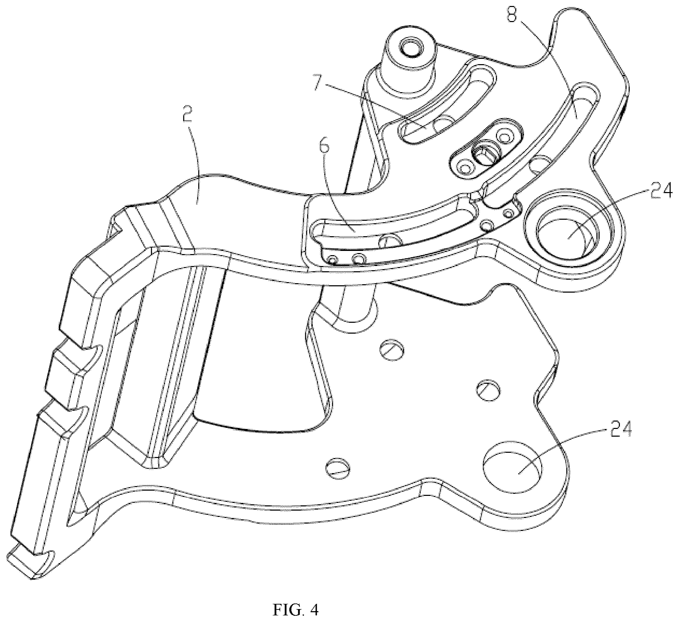

Referring to FIGs. 3 and 4, a display screen includes a curvature adjustment mechanism, which includes a first unit 1, a second unit 2, a first slider 3 and a second slider 4. The first slider 3 and the second slider 4 are fixedly connected to the first unit 1; the second unit 2 is provided with a first arcuate groove 6 and a second arcuate groove 7, and the centers of the first arcuate groove 6 and the second arcuate groove 7 do not overlap; the first slider 3 is able to slide in the first arcuate groove 6, and the second slider 4 is able to slide in the second arcuate groove 7. The use of eccentric double arcuate grooves to limit the sliding of the first unit 1 and the second unit 2 can solve the problem that when the curvature of the display screen is adjusted with a single arcuate groove, the display screen is not in an ideal curvature.

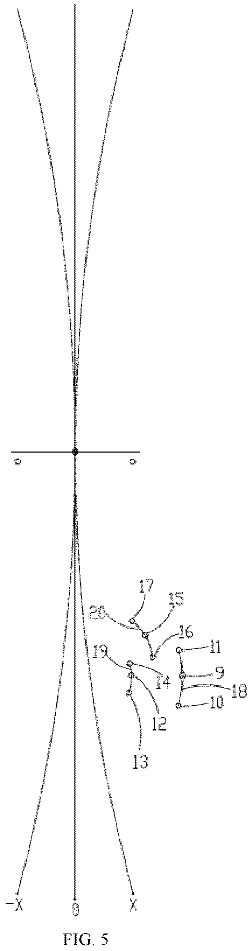

Referring to FIG. 5, in some embodiments, the first arcuate groove 6 and the second arcuate groove 7 are determined by taking a first point and a second point on the second unit 2, where:
when the curvature of the display screen is O degrees, the first point is at position A9,
and the second point is at position E12;
when the curvature of the display screen is X degrees, the first point is at position B10 and the second point is at position F13; and
when the curvature of the display screen is -X degrees, the first point is at position C11 and the second point is at position G14; where,
the arc line L18 formed by connecting the position A9, the position B10 and the position C11 is on the same circle as the first arcuate groove 6;
the arc line M19 formed by connecting the position E12, the position F13, and the position G14 is on the same circle as the second arcuate groove 7.

The arc line L18 is the ideal trajectory of the first point changing from -X degrees to X degrees. Since the first arcuate groove 6 and the arc line L18 are on the same circle, the first arcuate groove 6 is also the ideal trajectory of the display screen changing from -X degrees to X degrees.

The arc line M19 is the ideal trajectory of the second point changing from -X degrees to X degrees. Since the second arcuate groove 7 and the arc line M19 are on the same circle, the second arcuate groove 7 is also the ideal trajectory of the display screen changing from -X degrees to X degrees.

When adjusting the curvature of the display screen, the first arcuate groove 6 and the second arcuate groove 7 will simultaneously limit the deformation of the display screen, thereby preventing a part of the display screen from bending when adjusting the curvature of the display screen.

Referring to FIGs. 3 and 4, in some embodiments, a third slider 5 is fixedly provided on the first unit 1, and the second unit 2 is provided with a third arcuate groove 8, and the third slider 5 is able to slide in the third arcuate groove 8; the centers of the first arcuate groove 6, the second arcuate groove 7 and the third arcuate groove 8 do not overlap.

Referring to FIG. 5, in some embodiments, the third arcuate groove 8 is determined by taking a third point on the second unit 2, where:
when the curvature of the display screen is O degrees, the third point is at position H15;
when the curvature of the display screen is X degrees, the third point is at position I16; and
when the curvature of the display screen is -X degrees, the third point is at position J17; where,
the arc line N20 formed by connecting the position H15, the position I16, and the position J17 is on the same circle as the third arcuate groove 8.

The arc line N20 is the ideal trajectory of the third point changing from -X degrees to X degrees. Since the third arcuate groove 8 and the arc line N20 are on the same circle, the third arcuate groove 8 is also the ideal trajectory of the display screen changing from -X degrees to X degrees.

When adjusting the curvature of the display screen, the first arcuate groove 6, the second arcuate groove 7 and the third arcuate groove 8 will simultaneously limit the deformation of the display screen, because three points determine one surface, thereby preventing a part of the display screen from bending when adjusting the curvature of the display screen.

Referring to FIG. 3, in some embodiments, the first unit 1 includes a first part 101 and a second part 102, and the first part 101 and the second part 102 are arranged opposite to each other; both the first part 101 and the second part 102 are fixedly provided with the first slider 3, the second slider 4 and the third slider 5, the second unit 2 includes a third part 201 and a fourth part 202, and both the third part 201 and the fourth part 202 are provided with the first arcuate groove 6, the second arcuate groove 7 and the third arcuate groove 8; where, the first slider 3 on the first part 101 is able to slide in the first arcuate groove 6 on the third part 201; the second slider 4 on the first part 101 is able to slide in the second arcuate groove 7 on the third part 201; the third slider 5 on the first part 101 is able to slide in the third arcuate groove 8 on the third part 201, so that the first part 101 and the third part 201 are slidably connected. The first slider 3 on the second part 102 is able to slide in the first arcuate groove 6 on the fourth part 202; the second slider 4 on the second part 102 is able to slide in the second arcuate groove 7 on the fourth part 202; the third slider 5 on the second part 102 is able to slide in the third arcuate groove 8 on the fourth part 202, so that the second part 102 and the fourth part 202 are slidably connected.

Referring to FIG. 3, in some embodiments, the first unit 1 further includes a first connecting portion 103, one end of the first connecting portion 103 is connected to the first part 101, and the other end of the first connecting portion 103 is connected to the second part 102, and the first part 101, the first connecting portion 103 and the second part 102 are connected to form a U shape. The second unit 2 further includes a second connecting portion 203, one end of the second connecting portion 203 is connected to the third part 201, and the other end of the second connecting portion 203 is connected to the fourth part 202. The third part 201, the second connecting portion 203 and the fourth part 202 are connected to form a U shape. The second unit 2 is arranged in the first unit 1, and the first connecting portion 103 is opposite to the second connecting portion 203.

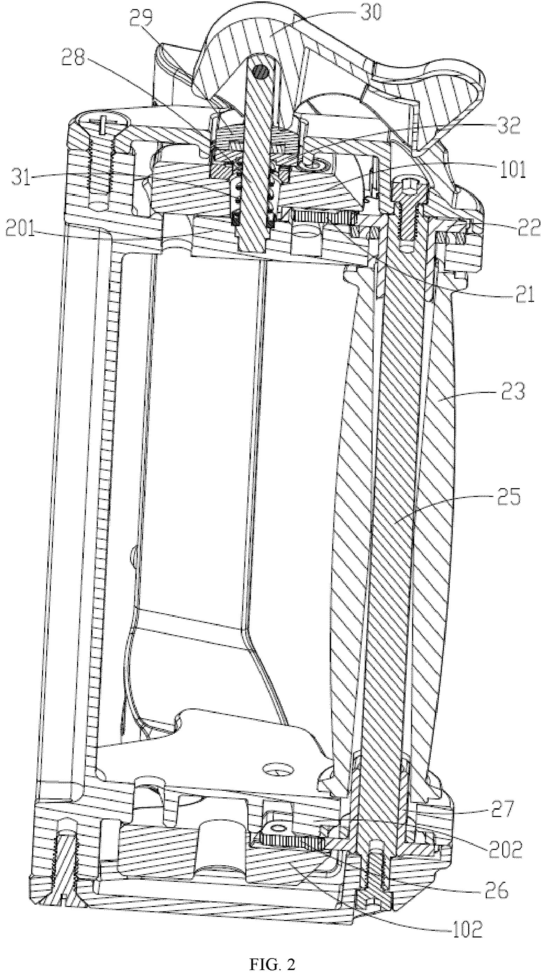

Referring to FIGs. 2 and 3, in order to achieve high-precision curvature adjustment of the display screen, the curvature adjustment mechanism further includes a spline assembly, a gear assembly and a driving rod 23. The spline assembly includes a first spline 21, and the first spline 21 is fixed to the first part 101. Equally, the first spline 21 may also be fixed to the third part 201. The gear assembly includes a first gear 22, the first gear 22 is engaged with the first spline 21; the driving rod 23 is fixedly connected to the first gear 22; the third part 201 and the fourth part 202 are provided with a mounting hole 24 (see FIG. 4), and two ends of the driving rod 23 are respectively inserted into the mounting hole 24 of the third part 201 and the mounting hole 24 of the fourth part 202, so that the driving rod 23 is rotatably connected to the third part 201 and the fourth part 202. When adjusting the curvature of the display screen, it is only necessary to rotate the driving rod 23. The driving rod 23 drives the first gear 22 to rotate. The first gear 22 rotates to drive the first spline 21 to slide relative to the second unit 2. By using the meshing of the gear and the spline, the curvature of the display can be adjusted accurately to one degree.

Referring to FIG. 2, in some embodiments, the curvature adjustment mechanism further includes a connecting rod 25, one end of the connecting rod 25 is connected to the third part 201, and the other end of the connecting rod 25 is connected to the fourth part 202. In some embodiments, the driving rod 23 is sleeved on the first gear 22, the first gear 22 is sleeved on the connecting rod 25, and the first gear 22 is able to rotate relative to the connecting rod 25. When the driving rod 23 is rotated, the first gear 22 rotates along with the driving rod 23, and the connecting rod 25 remains stationary. In other embodiments, the driving rod 23 is sleeved on the first gear 22, the first gear 22 is sleeved on the connecting rod 25, and the first gear 22 is fixedly connected to the connecting rod 25; the connecting rod 25 is rotatably connected to the third part 201 and the fourth part 202. When the driving rod 23 is rotated, the first gear 22 rotates along with the driving rod 23, and the connecting rod 25 also rotates along with the driving rod 23.

Referring to FIG. 2, in some embodiments, the spline assembly further includes a second spline 26, the second spline 26 is fixed to the second part 102; the gear assembly further includes a second gear 27, the second gear 27 is engaged with the second spline 26; the first gear 22 and the second gear 27 are respectively fixedly connected to the two ends of the driving rod 23. In some embodiments, two ends of the driving rod 23 are provided with a square hole, an end portions of the first gear 22 and the second gear 27 are provided a square connecting portion, the square connecting portion is inserted into the square hole, to realize the connection between the first gear 22, the second gear 27 and the driving rod 23.

Referring to FIG. 3, in some embodiments, the edges a of the first spline 21 and the second spline 26 close to the gear assembly are arc-shaped. So that the sliding tracks of the first unit 1 and the second unit 2 are arc-shaped.

The first spline 21 is provided between the first part 101 and the third part 201; the second spline 26 is provided between the second part 102 and the fourth part 202, to prevent fingers from being squeezed when the gear and spline are engaged. In some embodiments, the first spline 21 is fixed on the third part 201, and the second spline 26 is able to be fixed on the fourth part 202.

Referring to FIGs. 2 and 3, in some embodiments, the curvature adjustment mechanism further includes a locking mechanism, and the locking mechanism is able to lock the first unit 1 and the second unit 2. Specifically, the locking mechanism includes a fixing rod 28, a locking block 29, a cam handle 30 and a spring 31. One end of the fixing rod 28 is fixedly connected to the third part 201. The first part 101 is provided with a fourth arcuate groove 1011. The other end of the fixing rod 28 passes through the fourth arcuate groove 1011 and is hinged to the cam handle 30. The locking block 29 and the spring 31 are sleeved on the fixing rod 28. The spring 31 is provided between the locking block 29 and the third part 201. The cam handle 30 is rotated to push the locking block 29 to abut against the first part 101, thereby achieving locking of the first unit 1 and the second unit 2 due to the friction between the locking block 29 and the first part 101. When unlocking, the cam handle 30 is rotated, and the locking block 29 is pushed away from the first part 101 by the spring 31, thereby unlocking the first unit 1 and the second unit 2. In some embodiments, the locking mechanism further includes a locking bar 32, the locking bar 32 is fixed to the first part 101, and the locking bar 32 corresponds to the locking block 29. The surface of the locking bar 32 opposite to the locking block 29 is provided with a first sawtooth 3201; the surface of the locking block 29 opposite to the locking bar 32 is provided with a second sawtooth (not shown in the drawings). When the first unit 1 and the second unit 2 are locked, the first sawtooth 3201 cooperates with the second sawtooth to better lock the first unit 1 and the second unit 2.

The above description is only a preferred embodiment of the present disclosure and is not intended to limit the present disclosure. Any modifications, equivalent replacements and improvements made within the spirit and principles of the present disclosure should be included in the scope of protection of the present disclosure.

## Claims

1. A display screen, comprising a curvature adjustment mechanism, wherein the curvature adjustment mechanism comprises:
a first unit, a first slider and a second slider, wherein the first slider and the second slider are fixedly connected to the first unit;
a second unit, provided with a first arcuate groove and a second arcuate groove, wherein centers of the first arcuate groove and the second arcuate groove do not overlap; the first slider is able to slide in the first arcuate groove, and the second slider is able to slide in the second arcuate groove.

2. The display screen according to claim 1, wherein a first point and a second point are taken on the second unit, and wherein,
when a curvature of the display screen is O degrees, the first point is at a position A, and the second point is at a position E;
when the curvature of the display screen is X degrees, the first point is at a position B, and the second point is at a position F; and
when the curvature of the display screen is -X degrees, the first point is at a position C and the second point is at a position G; wherein,
an arc line L formed by connecting the position A, the position B and the position C is on the same circle as the first arcuate groove; and
an arc line M formed by connecting the position E, the position F and the position G is on the same circle as the second arcuate groove.

3. The display screen according to claim 2, further comprising a third slider, wherein the third slider is fixedly connected to the first unit;
the second unit is provided with a third arcuate groove, and the third slider is able to slide in the third arcuate groove; centers of the first arcuate groove, the second arcuate groove and the third arcuate groove do not overlap.

4. The display screen according to claim 3, wherein a third point is taken on the second unit, and wherein,
when a curvature of the display screen is O degrees, the third point is at a position H;
when the curvature of the display screen is X degrees, the third point is at a position I; and
when the curvature of the display screen is -X degrees, the third point is at a position J; wherein,
an arc line N formed by connecting the position H, the position I, and the position J is on the same circle as the third arcuate groove.

5. The display screen according to any one of claims 1 to 4, wherein the first unit comprises a first part and a second part, the first part and the second part are arranged opposite to each other; the first part and the second part are both fixedly provided with the first slider and the second slider;
the second unit comprises a third part and a fourth part, and the third part and the fourth part are both provided with the first arcuate groove and the second arcuate groove; wherein,
the first part is slidably connected to the third part; the second part is slidably connected to the fourth part.

6. The display screen according to claim 5, wherein the curvature adjustment mechanism further comprises:
a spline assembly comprising a first spline fixed to the first part;
a gear assembly comprising a first gear meshing with the first spline; and
a driving rod, fixedly connected to the first gear; wherein,
the driving rod is rotatably connected to the third part and the fourth part.

7. The display screen according to claim 6, wherein the curvature adjustment mechanism further comprises a connecting rod, one end of the connecting rod is connected to the third part, and the other end of the connecting rod is connected to the fourth part; the driving rod is sleeved on the connecting rod, and the first gear is arranged between the driving rod and the connecting rod.

8. The display screen according to claim 7, wherein:
the first gear is able to rotate relative to the connecting rod;
or, the first gear is fixedly connected to the connecting rod; and the connecting rod is rotatably connected to the third part and the fourth part.

9. The display screen according to claim 6, wherein:
the spline assembly further comprises a second spline fixed to the second part;
the gear assembly further comprises a second gear meshing with the second spline; the first gear and the second gear are fixedly connected to two ends of the driving rod respectively.

10. A curvature adjustment mechanism, comprising:
a first unit, a first slider and a second slider, wherein the first slider and the second slider are fixedly connected to the first unit;
the second unit is provided with a first arcuate groove and a second arcuate groove, wherein centers of the first arcuate groove and the second arcuate groove do not overlap; the first slider is able to slide in the first arcuate groove, and the second slider is able to slide in the second arcuate groove.
